# EUROPÄISCHE PATENTSCHRIFT

(11) **EP 1 071 840 B1**
(45) Veröffentlichungstag und Bekanntmachung des Hinweises auf die Patenterteilung: **05.06.2002**
(21) Anmeldenummer: 99917974.0
(22) Anmeldetag: 13.04.1999
(51) Int. Cl.: D05B 69/10, H02K 41/03, D05B 29/02, D05B 27/24, D05B 19/12, D05B 65/00, D05B 27/02

(54) **NÄH- ODER STICKMASCHINE**
SEWING OR KNITTING MACHINE
MACHINE A COUDRE OU A TRICOTER

(30) Priorität: 15.04.1998 DE 19816607; 12.02.1999 DE 19906433
(43) Veröffentlichungstag der Anmeldung: 31.01.2001
(73) Patentinhaber: G.M. PFAFF AKTIENGESELLSCHAFT, 67655 Kaiserslautern (DE)
(72) Erfinder: HÜLSHOFF, Hartmut, D-67271 Battenberg (DE)
(74) Vertreter: Klein, Friedrich
(86) Internationale Anmeldenummer: EP9902460
(87) Internationale Veröffentlichungsnummer: WO9953127

(56) Entgegenhaltungen:
- US-A- 3 735 717
- US-A- 3 984 745
- US-A- 4 016 441
- US-A- 4 286 197
- US-A- 4 428 313
- US-A- 4 507 597
- US-A- 5 551 361

## Beschreibung

Die Erfindung betrifft eine Näh- oder Stickmaschine gemäß dem Oberbegriff der Patentansprüche 1 und 2.

Bekannte Nähmaschinen weisen im allgemeinen einen mit einer fadenführenden Nadel zusammenwirkenden Greifer, sowie eine Vorschubeinrichtung mit einem Antrieb für Vorschubelement und eine Niederhalteeinrichtung mit einen Niederhalter für das Nähgut auf.

Während des Nähvorganges wird das Nähgut üblicherweise zwischen dem Vorschubelement und dem Niederhalter gehalten, der kraftschlüssig auf dem Nähgut aufliegt. Das meist formschlüssig angetriebene und an seiner Oberseite mit einer Zahnung versehene Vorschubelement tritt während der eigentlichen Vorschubphase aus dem Bereich der Stichplatte hervor und drückt das Nähgut gegen den Niederhalter und somit diesen nach oben. Das Vorschubelement führt dabei eine im wesentlichen ellipsenförmige Bewegung aus, wobei die eigentliche Vorschubbewegung in Richtung der Längsachse der Ellipse und die Hubbewegung in der Richtung der kurzen Achse der Ellipse erfolgen.

Sofern diese Bewegungen durch mechanische Getriebe erreicht werden, werden hierzu meist Exzenter- oder Lenkergetriebe eingesetzt, wobei die Stichlänge bei Lenkergetrieben durch Verlagerung der Gelenkpunkte und bei Exzentergetrieben entweder durch Verändern der wirksamen Exzentrizität des Exzenters oder durch Verändern der Schräglage der entsprechenden Kulisse verändert werden kann. Während die Stichlänge somit während des Nähens durch Betätigen einer Handtaste oder eines sonstigen Betätigungsmittels verändert werden kann, kann die Hubbewegung des Stoffschiebers nur bei Stillstand durch einen mittels Werkzeugen erfolgenden Eingriff verändert werden.

Im Zusammenhang mit musterbildenden Zick-Zack-Nähmaschinen wurde es durch die DE 29 03 031 bekannt, den Stoffschieber mittels eines Impulsmotors über Gestänge und Hebelgetriebe zu bewegen, um hierdurch durch Veränderung der Stichlänge eine Längenänderung des entsprechenden Nähmusters zu erzielen. Um hierbei auch die Breite des Nähmusters während des Nähens verändern zu können, weist der die Querbewegung der Nadelstange bewirkende Antrieb ebenfalls einen Impulsmotor auf, mit dessen Hilfe die Überstichbreite der Nadelbewegung verändert werden kann.

Obwohl es somit bekannt ist, sowohl die Überstichbreite der Nadelbewegung als auch die Stichlänge während des Nähens zu verändern, ist es seither nicht bekannt geworden, auch die Größe der Vertikalbewegung des Vorschubelementes während des Nähens zu verändern.

Bei bekannten Nähmaschinen schlägt das Vorschubelement während des Nähens in rascher Folge gegen den Niederhalter; daher wird zur Vermeidung eines Abhebens des Niederhalters vom Nähgut die Kraft mit der die Feder den Niederhalter nach unten drückt, relativ groß bemessen.

Doch selbst bei einer relativ großen Andruckkraft des Niederhalters, die in der Größenordnung von mehr als 6 kg liegt, kann insbesondere bei hohen Nähgeschwindigkeiten, bei denen das zwangsweise angetriebene Vorschubelement in entsprechend schneller Folge gegen die Unterseite des Niederhalters schlägt, und dieser dabei in Schwingungen gerät, ein zeitweises Abheben des Niederhalters vom Nähgut nicht immer vermieden werden. Hierdurch entsteht einerseits ein nicht gleichförmiger Transport des Nähgutes und andererseits wird die Nahtqualität durch den dadurch bedingten ungleichförmigen Sticheinzug nachteilig beeinflußt.

In der DE-36 36 548 A1 ist eine Nähmaschine beschrieben, bei der der Niederhalter für das Nähgut mittels einer Servospule anhebbar ist. Mittels einer weiteren Servospule kann die Andruckkraft des Niederhalters auf das Nähgut eingestellt werden. Ferner ist hierbei die Stichlänge von Hand vorgebbar und mittels eines Servomagneten reduzierbar.
Die über ein Potentiometer in einen Datenspeicher eingelesenen Werte der Andruckkraft des Niederhalters können während des Betriebes der Nähmaschine mit Vorgabewerten verglichen werden, sodaß die Andruckkraft des Niederhalters auf das Nähgut dementsprechend verändert werden kann. Eine Abhängigkeit der Andruckkraft des Niederhalters von der Bewegungscharakteristik des Vorschubelementes ist hierbei nicht angestrebt und wird auch nicht erreicht.

Der Erfindung liegt die Aufgabe zugrunde, eine Vorschubeinrichtung für gattungsgemäße Nähmaschinen zu schaffen, die es ermöglicht, unter Gewährleistung einer entsprechenden Synchronisation der Horizontalund Vertikal-Bewegungen des Vorschubelementes, diese während des Nähens selbst bei hohen Drehzahlen unabhängig voneinander zu variieren.

Diese Aufgabe wird bei einer gattungsgemäßen Nähmaschine dadurch gelöst, daß die Vorschubeinrichtung zum Antrieb des Vorschubelementes einen Linearantrieb mit zwei antreibbaren Elementen (Ankern) aufweist, wobei der eine Anker in horizontaler und der andere Anker in vertikaler Richtung bewegbar ist, und daß der Vorschubeinrichtung eine Regeleinrichtung mit einem Regelkreis für die Horizontal-Bewegungen sowie mit einem Regelkreis für die Vertikal-Bewegungen des Vorschubelementes zugeordnet ist, wobei beide Regelkreise einer eine Datenverarbeitungseinrichtung umfassenden Haupt-Regeleinrichtung untergeordnet sind, die ihre Synchronisationsimpulse von einem Encoder in Abhängigkeit von der jeweils momentanen Position von Nadel oder Greifer erhält, und der die lstwerte der Horizontal- und/oder der Vertikal-Bewegungen des Vorschubelementes wahlweise zuführbar sind.

Hierdurch bietet sich die Möglichkeit, sowohl die Größe als auch die Phasenlage der Vertikalbewegung des Vorschubelementes unabhängig sowohl von der Größe als auch von der Phasenlage seiner Horizontalbewegung zu verändern, und die Größe der Vertikalbewegung des Vorschubelementes unabhängig von dessen Horizontalbewegung derart zu beeinflussen, daß einerseits ein ausreichender Kraftfluß zwischen dem Nähgut und dem Vorschubelement gewährleistet ist, und andererseits der Auflagedruck des Niederhalters nicht unnötig groß gewählt werden muß. Dabei ist es selbstverständlich auch möglich, die Phasenlage der Vertikalbewegung und/oder die Phasenlage der Horizontalbewegung des Vorschubelementes innerhalb von durch die Erfordernisse der Stichbildung vorgegebener Grenzen zur Phasenlage der Nadel- und/oder Greiferbewegung zu variieren.

Während beim vorbekannten Stand der Technik der Eingriff in die Bewegungscharakteristik des Vorschubelementes ausschließlich zur Veränderung der Stichlänge erfolgt, kann bei der Erfindung durch die Haupt-Regeleinrichtung (selbst unter Beibehaltung der Stichlänge) während eines jeden Stichbildevorganges ständig in die Charakteristik der Vertikal- und/oder der Horizontalbewegung des Vorschubelementes eingegriffen werden, um die gesamte Stichbildephase stets unter Einhaltung optimaler Verhältnisse zu vollziehen.

Durch die Erfindung können die gesamten mechanischen Bauelemente wie Wellen und Getriebezüge, die bei bekannten Nähmaschinen zur Bewegung des Vorschubelementes und zur Änderung seiner Bewegung benötigt werden, entfallen und insbesondere auch die elektromechanischen Zusatzaggregate, die bei Nähmaschinen mit automatisch verstellbarer Stichlänge und Nährichtung bekannt sind. Die Veränderung der Stichlänge und der Nährichtung können bei voller Nähgeschwindigkeit durchgeführt werden.

Der Erfindung liegt die weitere Aufgabe zugrunde, eine Vorschub- und eine Niederhalteeinrichtung für eine gattungsgemäße Nähmaschine zu schaffen, die es ermöglichen, das Zusammenwirken des Niederhalters mit dem Vorschubelement derart zu beeinflussen, daß die Andruckkraft des Niederhalters während des Nähvorganges an die jeweilige Momentangeschwindigkeit und die Momentan-Vertikalkraft des Vorschubelementes anpaßbar ist.

Diese Aufgabe wird für gattungsgemäße Nähmaschinen dadurch gelöst, daß das Zusammenwirken des Vorschubelementes mit dem Niederhalter durch eine eine Datenverarbeitungseinrichtung umfassende Haupt-Regeleinrichtung, die sowohl auf eine Regeleinrichtung für den Antrieb des Vorschubelementes als auch auf eine Regeleinrichtung für den Antrieb des Niederhalters einwirkt, derart regelbar ist, daß die Andruckkraft des Niederhalters der Momentanbewegung des Vorschubelementes folgt, wobei die Haupt-Regeleinrichtung ihre Synchronisationsimpulse von einem Encoder in Abhängigkeit von der jeweils momentanen Position von Nadel oder Greifer erhält.

Auch hier kann während eines jeden einzelnen Vorschubschrittes des Vorschubelementes und somit während des gesamten Stichbildevorganges die Andruckkraft des Niederhalters durch die Haupt-Regeleinrichtung an die Bewegungscharakteristik des Vorschubelementes angepaßt werden. Da sich für den gesamten Nähvorgang die Andruckkraft des Niederhalters stichgenau an die jeweilige momentane Geschwindigkeit des Vorschubelementes anpassen läßt, wird für den gesamten Nähvorgang ein optimales Zusammenspiel von Niederhalter und Vorschubelement und damit eine erhebliche Steigerung der Nahtqualität unter gleichzeitiger Reduzierung sowohl des Geräuschpegels als auch der Vibrationen der Nähmaschine erreicht.

Eine regelungstechnisch günstige Realisierung ergibt sich dadurch, daß die Istwerte der Vertikal-Bewegungen und/oder der Horizontal-Bewegungen des Vorschubelementes, insbesondere aber die Istwerte der Vertikal-Bewegungen der Haupt-Regeleinrichtung zuführbar sind, und die Regelung des Antriebes für den Niederhalter in Abhängigkeit von den Istwerten des Vorschubelementes, insbesondere von den Istwerten der Vertikalbewegung des Vorschubelementes erfolgt.

Um sowohl am Nahtanfang als auch am Nahtende und gegebenenfalls auch bei Nahtunterbrechungen den Niederhalter schnell in eine seiner beiden Endlagen oder in seine Arbeitsstellung bewegen zu können, ist dieser mittels seinem Antrieb zuführbaren externen Signalen wahlweise in seine obere oder untere Endlage überführbar. Der Niederhalter kann somit schnell in seine Endlagen oder in seine Arbeitsposition bewegt werden, in der er dann eine an die Bewegungscharakteristik der Horizontal- bzw der Vertikalbewegung des Vorschubelementes angepaßte Andruckkraft auf das Nähgut ausübt.

Durch die Erfindung können die mechanischen Bauelemente wie Blattfeder, Bowdenzug, Kniehebel Niederhalter-Magnet, die zur Betätigung des Niederhalters benötigt werden, entfallen.

Die Erfindung bietet aufgrund der voneinander unabhängig gesteuerten Horizontal- und Vertikal-Bewegung des Vorschubelementes die Möglichkeit, aufgrund der Veränderung der Vertikal- und/oder der Horizontal-Bewegung das Vorschubelement gleichzeitig auch als Träger für einen an ihm zu befestigenden Fadenfänger/Fadenschneider heran zu ziehen und dieses zusammen mit dem Fadenfänger/Fadenschneider so zu bewegen, daß der Greiferfaden und der zu erfassende Schenkel der Nadelfadenschleife während einer durch ein dem Antrieb der Vorschubeinrichtung zuführbares externes Signal einleitbaren vergrößerten Horizontal-Bewegung und gegebenenfalls auch vergrößerten Vertikal-Bewegung des Vorschubelementes durch den Fadenfänger/Fadenschneider erfaßbar und einem Messer zuführbar sind. Im Vergleich zu den bekannten Fadenschneidsystemen wird hierdurch der Aufwand für das Erfassen von Nadel- und Greiferfaden wesentlich reduziert und der Schneidvorgang kann bei höherer Nähgeschwindigkeit ablaufen.

Dabei kann gemäß einem weitergehenden Vorschlag der Erfindung, das dem Antrieb der Vorschubeinrichtung zuführbare externe Signal zur Vergrößerung der Bewegung des Vorschubelementes auch zum Lösen der Spannungseinrichtung für den Nadelfaden dienen.
Sofern hierbei der Fadenfänger den zum Nähgut führenden Schenkel der Nadelfadenschleife erfaßt hat, läßt sich hierdurch ein optimal kurzes Ende des am Nähgut verbleibenden Nadelfadens und eine ein sicheres Wiederannähen gewährleistende freie Länge des am Fadenvorrat verbleibenden Nadelfadens erreichen.

Um verschiedene Näh- und Nähgutparameter wie Stichlänge, Vorschubgeschwindigkeit, Andruckkraft des Niederhalters, sowie Struktur, Dicke oder Oberflächenbeschaffenheit des Nähgutes, sowie Zusatzfunktionen wie Heben und Senken des Niederhalters oder Fadenschneiden speichern und abrufen zu können, weist die Datenverarbeitungseinrichtung einen Speicher für unterschiedliche Nähparameter und Zusatzfunktionen auf, die mittels eines Bedienfeldes oder über eine Schnittstelle abrufbar und der Haupt-Regeleinrichtung zuführbar sind.

Ein schnell reagierender Antrieb für die Niederhalteeinrichtung kann dadurch erreicht werden, wenn dieser als elektronisch geregelter elektromagnetischer Einachsen-Linearantrieb ausgebildet ist, dessen Anker unmittelbar mit dem Träger für den Niederhalter verbunden ist.

Ebenso kann ein schnell reagierender Antrieb für die Vorschubeinrichtung dadurch erreicht werden, wenn die elektromagnetischen Linearantriebe der Vorschubeinrichtung als ein Zweiachsen-Linearantrieb mit zwei bewegungsmäßig miteinander verbundenen Ankern ausgebildet sind, wobei der eine Anker in horizontaler Richtung und der andere Anker in vertikaler Richtung antreibbar ist.

In diesem Fall kann die Bewegung des Ankers für die Horizontal-Bewegung des Vorschubelementes unabhängig oder abhängig von der Bewegung des Ankers für die Vertikal-Bewewegung des Vorschubelementes regelbar sein.

Eine in konstruktiver Hinsicht einfache Lösung ergibt sich dann, wenn die beiden Anker des Zweiachsen-Linearantriebes zu einem Anker zusammengefaßt sind, der sowohl in horizontaler als auch in vertikaler Richtung antreibbar ist.

Eine Lösung, bei der zur Bewegung des Vorschubelementes wenig Massekräfte zu überwinden sind, ergibt sich dadurch, daß das Vorschubelement unmittelbar mit einem oder mit den beiden Ankern für seine Vertikal- und Horizontalbewegung verbunden ist.

Um den Stator gleichzeitig als Führung für den Anker verwenden zu können und gleichzeitig ausreichend magnetische Masse im Luftspalt unterbringen zu können, sind die Anker des Zweiachsen-Linearantriebes prismenförmig ausgebildet und bestehen aus polarisierten Permanentmagneten ohne Eisenrückschluß, wodurch sich ein günstiges Kraft-/Masseverhältnis des magnetischen Materials ergibt. Diese Vorteile werden in gleicher Weise bei Verwendung eines prismenförmigen Ankers für den Antrieb des Niederhalters erreicht.

Eine für die hohe Lastwechselzahl verschleißfeste Lösung wird dann erreicht, wenn die Linearantriebe als bürstenlose Linearantriebe ausgebildet sind.

Zur Ermittlung der jeweiligen Momentanposition des Vorschubelementes bzw des Niederhalters ist es zweckmäßig, die Anker der Linearantriebe mittel- oder unmittelbar mit jeweils einem Encoder zu verbinden, wobei die Encoder für die Horizontal- und Vertikal-Bewegung des Vorschubelementes zu einem zweidimensionalen Encoder zusammengefaßt sind, dem zwei voneinander unabhängige Auswerteinrichtungen zugeordnet sind.

Vorteilhafter Weise weist dabei die Encoder-Scheibe zwei Gruppen von Strichelementen auf, wovon die erste Gruppe in einer ersten Richtung verläuft und durch die erste Auswerteinrichtung abtastbar ist, während die zweite Gruppe in einer zweiten Richtung verläuft und durch die zweite Auswerteinrichtung abtastbar ist.

Weitere Detailausbildungen und Vorteile der Erfindung ergeben sich anhand der nachfolgenden Beschreibung eines in der beigefügten Zeichnung dargestellten Ausführungsbeispieles derselben.

Es zeigt:
- Fig. 1:: eine schematische Darstellung einer Nähmaschine;

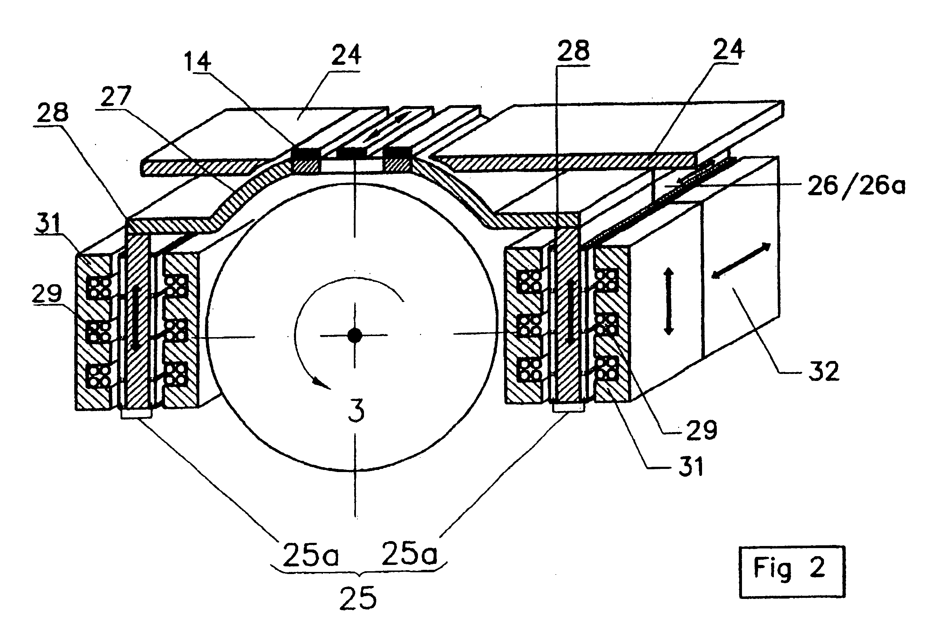

- Fig. 2:: eine perspektivische Darstellung des Vorschubelementes mit den Antrieben für seine Vertikal- und Horizontalbewegung;
- Fig. 3:: eine Darstellung des Encoders;
- Fig. 4:: eine Darstellung der einzelnen Bewegungsabschnitte des Vorschubelementes;
- Fig. 5:: den grundsätzlichen Aufbau des Antriebes für den Niederhalter
- Fig. 6:: eine schematische Darstellung der Regelkreise

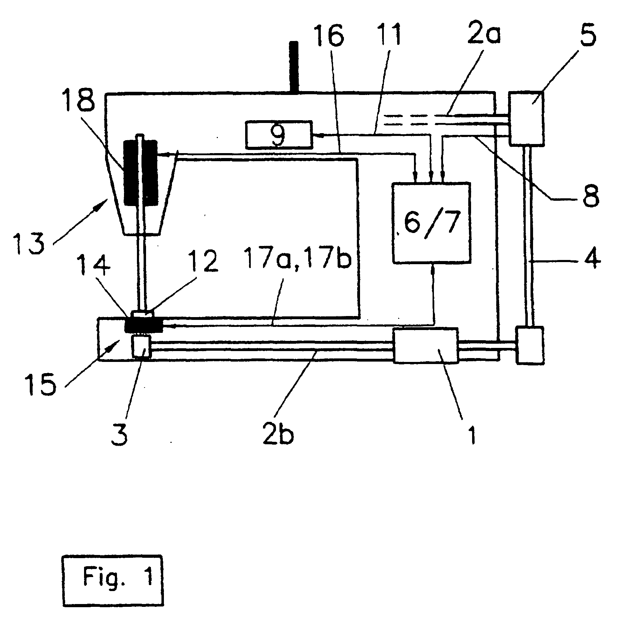

In Fig. 1 ist eine nicht näher bezeichnete Nähmaschine gezeigt, die einen Motor 1 aufweist, der über eine Welle 2b einen Greifer 3 antreibt. Der Motor 1 treibt gleichzeitig über einen Riementrieb 4 eine im Arm der Nähmaschine angeordnete Welle 2a, an deren vorderem (nicht dargestellten) Ende ein Antrieb für eine fadenführende Nadel vorgesehen ist.

Die auf und ab bewegbare Nadel arbeitet in üblicher Weise mit dem Greifer 3 zur Verschlingung von Nadel- und Greiferfaden zusammen.

Auf dem freien Ende der Welle 2a ist ein noch später im Detail zu beschreibender Encoder 5 angeordnet, der die jeweilige momentane Stellung der Nadel und somit auch des Greifers 2 über eine Leitung 8 einer Haupt-Regeleinrichtung 6, die auch eine Datenverarbeitungseinrichtung 7 umfaßt, in Form von Synchronisationsimpulsen mitteilt.

Im Arm der Nähmaschine ist ein Bedienfeld 9 oder eine Schnittstelle zum Anschluß eines Bedienfeldes 9 angeordnet, mit dessen Hilfe die einzelnen Näh- und Nähgutparameter wie Stichlänge, Vorschubgeschwindigkeit, Andruckkraft des Niederhalters, sowie Struktur, Dicke oder Oberflächenbeschaffenheit des Nähgutes, sowie Zusatzfunktionen wie Heben und Senken des Niederhalters oder Fadenschneiden ausgewählt und aus einem Speicher der Datenverarbeitungseinrichtung 6 ausgelesen und über diese der Haupt-Regeleinrichtung zugeführt werden können.

Das Bedienfeld 9 ist hierzu über eine Leitung 11 mit der Haupt-Regeleinrichtung 6 verbunden. Dieser ist eine Regeleinrichtung für die Bewegung eines Niederhalters 12 einer Niederhaltereinrichtung 13 sowie eine Regeleinrichtung für die Bewegungen eines Vorschubelementes 14 einer Vorschubeinrichtung 15 untergeordnet. Dabei weist die Regeleinrichtung für das Vorschubelement 14 zwei Regelkreise auf, wovon ein Regelkreis zum Regeln der Horizontal-Bewegung des Vorschubelementes 14 und der andere Regelkreis zum Regeln der Vertikal-Bewegung des Vorschubelementes 14 dient. Die Niederhalteeinrichtung 13 ist über eine Leitung 16 und die Vorschubeinrichtung 15 über eine Leitung 17a,17b mit der Haupt-Regeleinrichtung 6 verbunden.

Die Regeleinrichtung und die beiden angesprochenen Regelkreise werden hinsichtlich ihrer Funktion später noch näher beschrieben.

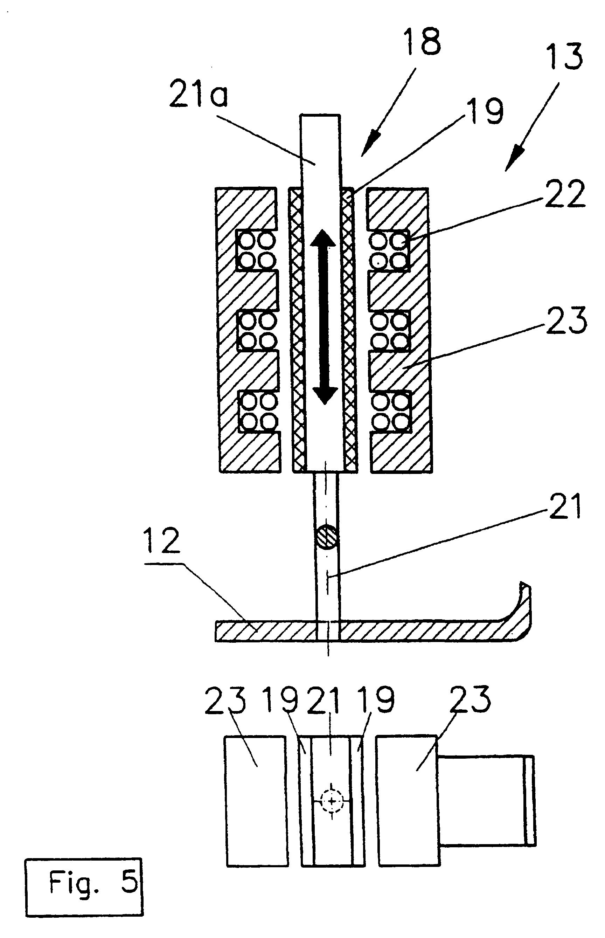

Die Niederhalteeinrichtung 13 weist zum Antrieb des Niederhalters 12 einen vorzugsweise bürstenlosen elektromagnetischen Einachsen-Linearantrieb 18 auf, dessen angetriebenes Element (Anker 19) (Fig. 5) unmittelbar mit einem Träger 21 bzw 21a für den Niederhalter 12 verbunden ist. Der Anker 19 wird von polarisierten Permanetmagneten gebildet, die von Wicklungen 22 eines vorzugsweise mit Kupferdrähten umwickelten Stators 23 umgeben sind. Der Stator 23 kann sowohl symmetrisch als auch asymmetrisch zum Anker 19 bzw zum Träger 21 bzw 21a angeordnet sein. Der Träger 21 bzw 21a weist vorzugsweise einen prismatischen Querschnitt auf und besteht aus einem sehr leichten Nichteisen-Material; er kann dann, wenn das Magnet-Material eine ausreichende Eigensteifigkeit aufweist, ausgehend vom Niederhalter 12 nur bis zum unteren Ende des Ankers 19 reichen, sodaß der Bereich 21 a entfällt.

Zum Antrieb des Vorschubelementes 14, das von einem in üblicher Weise durch entsprechende Schlitze in einer Stichplatte 24 hindurchtretenden und mit einer Zahnung versehenen Stoffschieber gebildet sein kann, dient ebenfalls ein elektromagnetischer Linearantrieb. Dieser weist zwei antreibbare Elemente (Anker 25 und Anker 26) auf, die in zueinander senkrechten Richtungen bewegbar sind. Dabei bewirkt der Anker 25 die Vertikal-Bewegung des Vorschubelementes 14, während der Anker 26 dessen Horizontal-Bewegung bewirkt.

Bei dem in der Zeichnung dargestellten Ausführungsbeispiel der Erfindung ist zur Aufnahme der beiden Anker 25, 26 ein Träger 27 vorgesehen, der in seinem mittleren Bereich dem Durchmesser des Greifers 3 entsprechend verläuft und zwei vorzugsweise symmetrische Tragarme 28 aufweist, die rechtwinklig nach unten abgewinkelt sind. Zumindest die abgewinkelten Bereiche der Tragarme 28 bestehen aus sehr leichtem Nichteisen-Material und sind beidseitig mit Permanentmagneten 25a bestückt. Bei ausreichender Eigensteifigkeit des Materials der Permanentmagnete 25a kann auf die abgewinkelten Bereiche der Tragarme 28 verzichtet werden, sodaß die Permanentmagnete 25a unmittelbar an den horizontal gerichteten Bereichen der Tragarme 28 angreifen können. Die Permanentmagnete 25a bilden den einen Anker 25 des Zweiachsen-Linearantriebes, dem mit Kupferdrähten 29 bewickelte Statoren 31 zugeordnet sind.

Der zur Erzielung der Horizontal-Bewegung des Vorschubelementes 14 dienende Anker 26 ist (in Vorschubrichtung des Nähgutes gesehen) hinter dem Anker 25 angeordnet. Der Anker 26 sowie ein ihm zugeordneter Stator 32 entsprechen hinsichtlich ihres wesentlichen Aufbaues dem Aufbau des Ankers 25 bzw des Stators 31. Da der Anker 26 zusammen mit dem Stator 32 zur Erzielung der Horizontal-Bewegung des Vorschubelementes 14 dient, sind die Permanentmagnete um 90 Grad zur Anordnung der Permanentmagnete des Ankers 25 versetzt angeordnet, sodaß auch die Wirkrichtung um 90 Grad zur Wirkrichtung des Ankers 25 versetzt ist. Beide Anker 25,26 bilden mit den entsprechenden Statoren 31,32 somit einen Zweiachsen-Linearantrieb, der bürstenlos ausgebildet ist.

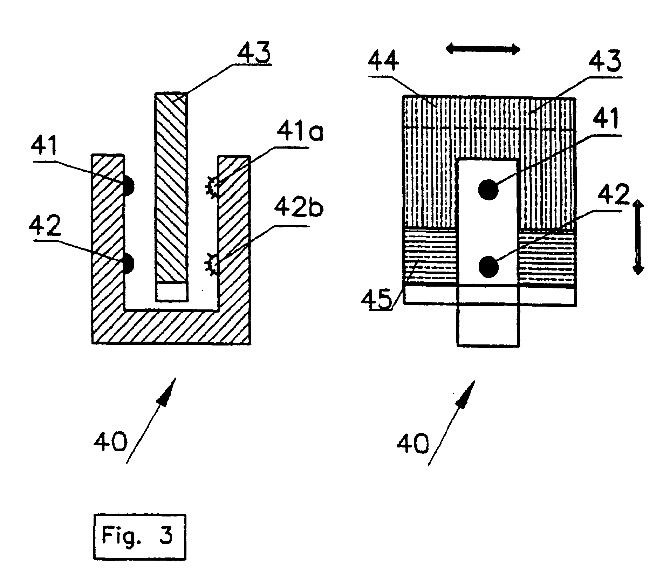

Zur Ermittlung der jeweiligen Position des Vorschubelementes 14 ist ein zweidimensionaler Encoder 40 vorgesehen (Fig.3), der mit dem Anker 25 oder dem Träger 27 verbunden ist. Der Encoder 40 weist eine Doppellichtschranke 41,41a und 42,42b auf, in die eine mit dem Vorschubelement 14 verbundene Zunge 43 eintaucht, die mit einer Doppelcodierung versehen ist. Die Zunge 43 weist in ihrem oberen Teil senkrecht verlaufende Codestriche 44 und in ihrem unteren Teil horizontal verlaufende Codestriche 45 auf.

Da die Vertikal-Bewegung des Vorschubelementes 14 im Verhältnis zu seiner Horizontal-Bewegung relativ klein ist, können beide Codestriche 44,45 gleichzeitig ausgewertet und die entsprechenden Signale an die Regeleinrichtung für das Vorschubelement 14 weitergeleitet werden. Zur Auswertung des Encoders 40 ist eine nicht näher dargestellte Auswerteinrichtung vorgesehen, die sowohl die Lichtschranke 41,41a, als auch die Lichtschranke 42,42b auswertet.

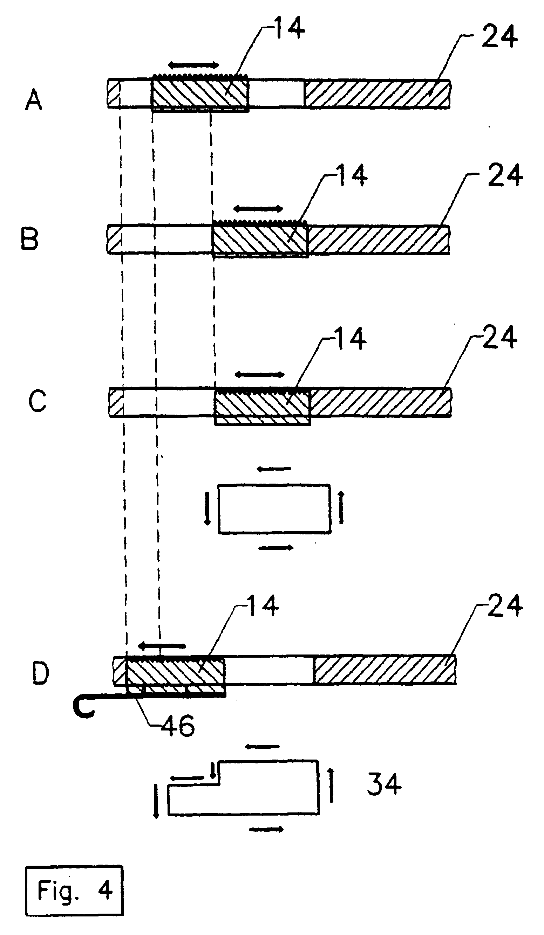

In Fig. 4 ist die Stichplatte 24 zusammen mit dem Vorschubelement 14 und einem Fadenfänger/Fadenschneider 46 dargestellt, wobei das Vorschubelement 14 in verschiedenen Stellungen seiner Bewegungsphase gezeigt ist. Dabei ist das Vorschubelement 14 in den Darstellungen A und B jeweils in seinen beiden horizontalen Endstellungen während des Nähens gezeigt. In der Darstellung C nimmt das Vorschubelement 14 zwar ebenfalls die in der Darstellung B gezeigte horizontale Stellung ein, jedoch nimmt es dabei seine untere Endstellung während des Nähens ein. Das unterhalb der Darstellung C gezeigte Rechteck symbolisiert zusammen mit den Pfeilen die nahezu rechteckförmige Bewegungsbahn des Vorschubelementes für das Nähen.
Der am Vorschubelement 14 befestigte Fadenfänger/Fadenschneider 46 nimmt an diesen Bewegungen teil, ohne hierbei eine Wirkung auf den Greifer- und/oder Nadelfaden auszuüben. Auch wird die Stichbildung durch den Fadenfänger/Fadenschneider 46 nicht behindert.

Zum Erfassen und Schneiden des Greifer- und Nadelfadens führt das Vorschubelement 14 eine gegenüber seiner üblichen Bewegungsbahn vergrößerte Bewegung aus, wobei sowohl die horizontale als auch die vertikale Bewegungskomponente derart verändert (vergrößert) sind, daß der Fadenfänger/Fadenschneider 46 den Greiferfaden direkt am (nicht gezeigten) Stichloch erfaßt und sich in das vom Nadelfaden gebildete Fadendreieck hinein bewegt, um auch den zum Nähgut führenden Schenkel des Nadelfadens zu erfassen. Das eigentliche Schneiden der erfaßten Fäden erfolgt dann während oder am Ende der Rückwärtsbewegung des Vorschubelementes von seiner in der Darstellung D gezeigten Fangstellung des Fadenfängers/Fadenschneiders 46 in die eigentliche Schneidstellung des Fadenfängers/Fadenschneiders 46, die sich im Bereich der in der Darstellung C gezeigten (horizontalen) Endstellung des Vorschubelementes 14 befindet. In einer anderen Varianten schneidet der Fadenfängers/Fadenschneiders 46 bereits während der in Darstellung D gezeigten vergrößerten Vorwärts- und Senkbewegung des Vorschubelementes 14. Zum Schneiden werden beide Fäden gegen eine Gegenschneide oder ein Messer bewegt und geschnitten. Dabei wird das freie Ende des Greiferfadenvorrates gegen eine klebrige oder klettverschlußartig aufgerauhte Fläche gedrückt und dort festgehalten.

Die zur Ausführung der unterhalb der Darstellung D durch ein abgestuftes Rechteck und die Pfeile symbolisierten Bewegung des Vorschubelementes 14 bzw des Fadenfängers/Fadenschneiders 46 erforderlichen Bewegungen sind in Datenform im Speicher der Datenverarbeitungseinrichtung abgelegt und können über das Bedienfeld 9 oder die Schnittstelle abgerufen werden.

Bei bekannten Fadenschneideinrichtungen ist es zur sicheren Erfassung des Greiferfadens und insbesondere des zum Nähgut führenden Teils des Nadelfadendreieckes erforderlich, den Fadenfänger/Fadenschneider 46 zeitlich genau in das Nadelfadendreieck zu bewegen. Dies kann erfindungsgemäß trotz der festen Zuordnung des Fadenfängers/Fadenschneiders 46 zum Vorschubelement dadurch relativ leicht gewährleistet werden, als sowohl die Horizontal- als auch die Vertikal-Bewegung des Fadenfängers/Fadenschneiders 46 zeitlich unabhängig von der Bewegung des Greifers steuerbar ist.

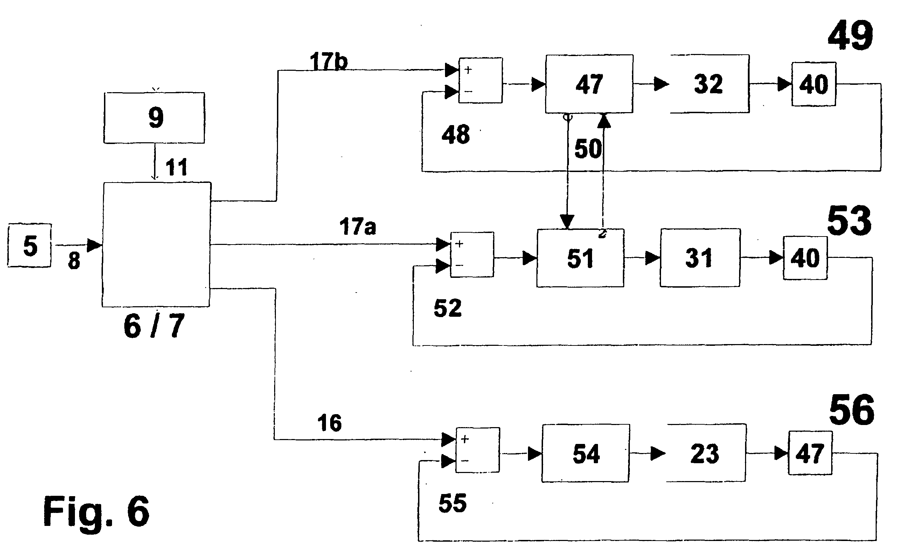

In Fig. 6 ist der Regelkreis für die Horizontalbewegung des Vorschubelementes mit 49, der Regelkreis für dessen Vertikal-Bewegung mit 53 und der Regelkreis für den Niederhalter 12 mit 56 bezeichnet.
Der Regelkreis 49 ist über die Leitung 17b, der Regelkreis 53 über die Leitung 17a und der Regelkreis 56 über die Leitung 16 mit der Haupt-Regeleinrichtung 6 mit Datenverarbeitungseinrichtung 7 verbunden. Außerdem ist das Bedienfeld 9 über die Leitung 11 sowie der Encoder 5 über die Leitung 8 mit der Haupt-Regeleinrichtung 6 verbunden.

Über die Leitung 16 werden von der Haupt-Regeleinrichtung 6 die Sollwerte für den Niederhalter 12 dem Regelkreis 56 zugeführt. Aus der Abweichung zwischen dem jeweiligen Sollwert und dem Istwert 55 ermittelt die Regeleinrichtung 54 die notwendigen Stellsignale für den Stator 23. Der Encoder 47 mißt die Momentanpositionen des Niederhalters 12 und führt den Istwert 55 zur Regeleinrichtung 54 zurück.

Über die Leitung 17a werden von der Haupt-Regeleinrichtung 6 die Sollwerte für die Vertikalpositionen des Vorschubelementes 14 dem Regelkreis 53 zugeführt. Aus der Abweichung zwischen dem jeweiligen Sollwert und dem Istwert 52 ermittelt die Regeleinrichtung 51 die notwendigen Stellsignale für den Stator 31. Der Encoder 40 mißt die vertikalen Momentanpositionen 52 des Vorschubelementes 14 und führt den Ist-wert 52 zur Regeleinrichtung 51 zurück.

Über die Leitung 17b werden von der Haupt-Regeleinrichtung 6 die Sollwerte für die Horizontalpositionen des Vorschubelementes 14 dem Regelkreis 49 zugeführt. Aus der Abweichung zwischen dem jeweiligen Sollwert und dem Istwert 48 ermittelt die Regeleinrichtung 47 die notwendigen Stellsignale für den Stator 32. Der Encoder 40 mißt die horizontalen Momentanpositionen 48 des Vorschubelementes 14 und führt den Istwert 48 zur Regeleinrichtung 47 zurück.

In der praktischen Ausführung werden die Regeleinrichtungen 47,51 und 54 und auch die Haupt-Regeleinrichtung 6 mit Datenverarbeitungseinrichtung 7 in einer integrierten Rechnereinheit realisiert; deshalb besteht zwischen den genannten Regeleinrichtungen eine informatorische Kopplung über alle Ist- und Sollwerte, die gegebenenfalls zur Lösung der Regelaufgabe von jeder der Regeleinrichtungen benutzt werden können. Symbolisch hierfür ist in Fig. 6 eine Datenleitung 50 zwischen den beiden Regeleinrichtungen 47, 51 gezeigt.

## Patentansprüche

1. Näh- oder Stickmaschine mit einer fadenführenden Nadel und mit einem mit dieser zusammenwirkenden Greifer, sowie mit einer Werkstück-Vorschubeinrichtung mit einem Antrieb für mindestens ein entlang einer vorbestimmbaren Bahn bewegbares Vorschubelement,
**dadurch gekennzeichnet, daß**
die Vorschubeinrichtung (15) zum Antrieb des Vorschubelementes (14) einen Linearantrieb mit zwei antreibbaren Elementen (Ankern 25, 26) aufweist, wobei der eine Anker (26) in horizontaler und der andere Anker (25) in vertikaler Richtung bewegbar ist, und daß der Vorschubeinrichtung (15) eine Regeleinrichtung (47, 51) mit einem Regelkreis (49) für die Horizontal-Bewegungen sowie mit einem Regelkreis (53) für die Vertikal-Bewegungen des Vorschubelementes (14) zugeordnet ist, wobei beide Regelkreise (49, 53) einer eine Datenverarbeitungseinrichtung (7) umfassenden Haupt-Regeleinrichtung (6) untergeordnet sind, die ihre Synchronisationsimpulse von einem Encoder (5) in Abhängigkeit von der jeweils momentanen Position von Nadel oder Greifer erhält, und die lstwerte (48, 52) der Horizontal- und/oder der Vertikal-Bewegungen des Vorschubelementes (14) wahlweise der Haupt-Regeleinrichtung (6) zuführbar sind.

2. Näh- oder Stickmaschine mit einer fadenführenden Nadel und mit einem mit dieser zusammenwirkenden Greifer, sowie mit einer Werkstück-Vorschubeinrichtung mit einem Antrieb für mindestens ein entlang einer vorbestimmbaren Bahn bewegbares Vorschubelement und mit einer Niederhalteeinrichtung mit einem Antrieb für einen Niederhalter für das Werkstück,
**dadurch gekennzeichnet, daß**
das Zusammenwirken des Vorschubelementes (14) mit dem Niederhalter (12) durch eine eine Datenverarbeitungseinrichtung (7) umfassende Haupt-Regeleinrichtung (6), die sowohl auf eine Regeleinrichtung (47, 51) für den Antrieb des Vorschubelementes (14) als auch auf eine Regeleinrichtung (54) für den Antrieb des Niederhalters (12) einwirkt, derart regelbar ist, daß die Andruckkraft des Niederhalters (12) der Momentanbewegung des Vorschubelementes (14) folgt, wobei die Haupt-Regeleinrichtung (6) ihre Synchronisationsimpulse von einem Encoder (5) in Abhängigkeit von der jeweils momentanen Position von Nadel oder Greifer erhält.

3. Näh- oder Stickmaschine nach Anspruch 2, **dadurch gekennzeichnet, daß**
die Istwerte (48, 52) der Vertikal-Bewegungen und/oder der Horizontal-Bewegungen des Vorschubelementes (14) der Haupt-Regeleinrichtung (6) zuführbar sind und die Regelung des Antriebes für den Niederhalter (12) in Abhängigkeit von den Istwerten (48, 52) des Vorschubelementes (14) erfolgt.

4. Näh- oder Stickmaschine nach einem oder mehreren der vorangehenden Ansprüche, **dadurch gekennzeichnet, daß**
der Niederhalter (12) mittels seinem Antrieb zuführbaren externen Signalen wahlweise in seine obere oder untere Endlage überführbar ist.

5. Näh- oder Stickmaschine mit einer Fadenschneideinrichtung mit den Greiferfaden und einen Schenkel der Nadelfadenschleife unterhalb der Stichplatte erfassenden Fadenfängers/Fadenschneiders nach einem oder mehreren der vorangehenden Ansprüche, **dadurch gekennzeichnet, daß**
der Fadenfänger/Fadenschneider (46) derart am Vorschubelement (14) angeordnet ist, daß der Greiferfaden und ein Schenkel der Nadelfadenschleife während einer durch ein dem Antrieb desr Vorschubelementes (14) zuführbares externes Signal einleitbaren vergrößerten Horizontal- und/oder Vertikalbewegung des Vorschubelementes (14) durch den Fadenfänger/Fadenschneider (46) erfaßbar und einem Messer zuführbar sind.

6. Näh- oder Stickmaschine nach Anspruch 5, **dadurch gekennzeichnet, daß**
das dem Antrieb des Vorschubelementes (14) zuführbare externe Signal zur Vergrößerung der Bewegung des Vorschubelementes (14) auch zum Lösen der Spannungseinrichtung für den Nadelfaden dient.

7. Näh- oder Stickmaschine nach einem oder mehreren der vorangehenden Ansprüche, **dadurch gekennzeichnet, daß**
die Datenverarbeitungseinrichtung (7) einen Speicher für unterschiedliche Nähparameter und Zusatzfunktionen aufweist, die mittels eines Bedienfeldes (9) oder über eine Schnittstelle abrufbar und der Haupt-Regeleinrichtung (6) zuführbar sind.

8. Näh- oder Stickmaschine nach einem oder mehreren der vorangehenden Ansprüche, **dadurch gekennzeichnet, daß**
der Antrieb der Niederhalteeinrichtung (13) als elektromagnetischer Einachsen-Linearantrieb ausgebildet ist, dessen Anker (19) unmittelbar mit einem Träger (21,21a) für den Niederhalter (12) verbunden ist.

9. Näh- oder Stickmaschine nach Anspruch 8, **dadurch gekennzeichnet, daß**
der Einachsen-Linearantrieb bürstenlos ist.

10. Näh- oder Stickmaschine nach Anspruch 8, **dadurch gekennzeichnet, daß**
der Anker (19) des Einachsen-Linearantrieb keinen Eisenrückschluß aufweist.

11. Näh- oder Stickmaschine nach einem oder mehreren der vorangehenden Ansprüche, **dadurch gekennzeichnet, daß**
der Träger (21,21a) für den Niederhalter (12) einen prismatischen Querschnitt aufweist.

12. Näh- oder Stickmaschine nach einem oder mehreren der vorangehenden Ansprüche, **dadurch gekennzeichnet, daß**
die elektromagnetischen Linearantriebe der Vorschubeinrichtung (15) als ein Zweiachsen-Linearantrieb mit zwei bewegungsmäßig miteinander verbundenen Ankern (25, 26) ausgebildet sind, wobei der eine Anker (26) in horizontaler Richtung und der andere Anker (25) in vertikaler Richtung antreibbar ist.

13. Näh- oder Stickmaschine nach einem oder mehreren der vorangehenden Ansprüche, **dadurch gekennzeichnet, daß**
die Bewegung des Ankers (26) für die Horizontalbewegung des Vorschubelementes (14) unabhängig von der Bewegung des Ankers (25) für die Vertikalbewewegung des Vorschubelementes (14) regelbar ist.

14. Näh- oder Stickmaschine nach einem oder mehreren der vorangehenden Ansprüche, **dadurch gekennzeichnet, daß**
die Bewegung des Ankers (26) für die Horizontalbewegung des Vorschubelementes (14) in Abhängigkeit von der Bewegung des Ankers (25) für die Vertikalbewewegung des Vorschubelementes (14) regelbar ist.

15. Näh- oder Stickmaschine nach einem oder mehreren der vorangehenden Ansprüche, **dadurch gekennzeichnet, daß**
die beiden Anker (25, 26) des Zweiachsen-Linearantriebes zu einem Anker zusammengefaßt sind, der sowohl in horizontaler als auch in vertikaler Richtung antreibbar ist.

16. Näh- oder Stickmaschine nach einem oder mehreren der vorangehenden Ansprüche, **dadurch gekennzeichnet, daß**
der in vertikaler Richtung antreibbare Anker (25) von zwei im Abstand und parallel zueinander angeordneten Anker-Stegen gebildet ist, die mittels eines einen Freiraum für den Greifer überbrückenden Trägers (27) miteinander verbunden sind.

17. Näh- oder Stickmaschine nach einem oder mehreren der vorangehenden Ansprüche, **dadurch gekennzeichnet, daß**
das Vorschubelement (14) unmittelbar mit einem oder mit den beiden Ankern (25, 26) für seine Vertikal- bzw Horizontalbewegung verbunden ist.

18. Näh- oder Stickmaschine nach einem oder mehreren der vorangehenden Ansprüche, **dadurch gekennzeichnet, daß**
die Anker (25, 26) des Zweiachsen-Linearantriebes prismenförmig ausgebildet sind und aus polarisierten Permanentmagneten (25a, 26a) bestehen.

19. Näh- oder Stickmaschine nach einem oder mehreren der vorangehenden Ansprüche, **dadurch gekennzeichnet, daß**
die Permanentmagnete (25a, 26a) so angeordnet bzw so polarisiert sind, daß die erste Gruppe derselben die Vertikalbewegung des Vorschubelementes (14) und die zweite Gruppe dessen Horizontalbewegung bewirkt.

20. Näh- oder Stickmaschine nach einem oder mehreren der vorangehenden Ansprüche, **dadurch gekennzeichnet, daß**
der Stator (31, 32) des Zweiachsen-Linearantriebes derart ausgebildet ist, daß eine erste Gruppe der Windungen bzw der Statorpole im Zusammenwirken mit der ersten Gruppe der Permanentmagnete die Vertikalbewegung des Vorschubelementes (14) und die zweite Gruppe der Windungen bzw der Statorpole im Zusammenwirken mit der zweiten Gruppe der Permanentmagnete die Horizontalbewegung des Vorschubelementes (14) bewirkt.

21. Näh- oder Stickmaschine nach einem oder mehreren der vorangehenden Ansprüche, **dadurch gekennzeichnet, daß**
die Anker (25, 26) des Zweiachsen-Linearantriebes keinen Eisenrückschluß aufweisen.

22. Näh- oder Stickmaschine nach einem oder mehreren der vorangehenden Ansprüche, **dadurch gekennzeichnet, daß**
der Zweiachsen-Linearantrieb als bürstenloser Linearantrieb ausgebildet ist.

23. Näh- oder Stickmaschine nach einem oder mehreren der vorangehenden Ansprüche, **dadurch gekennzeichnet, daß**
das Vorschubelement (14) unmittelbar am Träger (27) angeordnet ist.

24. Näh- oder Stickmaschine nach einem oder mehreren der vorangehenden Ansprüche, **dadurch gekennzeichnet, daß**
die Anker (25, 26) des Zweiachsen-Linearantriebes mittel- oder unmittelbar mit einem Encoder (40) verbunden sind, und dieser als zweidimensionaler Encoder ausgebildet ist.

25. Näh- oder Stickmaschine nach einem oder mehreren der vorangehenden Ansprüche, **dadurch gekennzeichnet, daß**
dem zweidimensionalen Encoder (40) zwei voneinander unabhängige Auswerteinrichtungen zugeordnet sind.

26. Näh- oder Stickmaschine nach einem oder mehreren der vorangehenden Ansprüche, **dadurch gekennzeichnet, daß**
der zweidimensionale Encoder (40) zwei Lichtschranken (41,41 a, 42,42b) oder zwei Hall-Sonden-Anordnungen aufweist.

27. Näh- oder Stickmaschine nach einem oder mehreren der vorangehenden Ansprüche, **dadurch gekennzeichnet, daß**
die Encoder-Scheibe zwei Gruppen (44,45) von Strichelementen aufweist, wovon die erste Gruppe (44) in einer ersten Richtung verläuft und durch eine erste Lichtschranke (41,41 a) abtastbar ist, während die zweite Gruppe (45) in einer zweiten Richtung verläuft und durch eine zweite Lichtschranke (42,42b) abtastbar ist.

28. Näh- oder Stickmaschine nach einem oder mehreren der vorangehenden Ansprüche, **dadurch gekennzeichnet, daß**
die Encoder-Scheibe zwei unterschiedlich codierte Bereiche aufweist, wovon der erste Bereich durch eine erste Hall-Sonden-Anordnung und der zweite Bereich durch eine zweite Hall-Sonden-Anordnung abtastbar ist.

## Claims

1. Sewing or embroidering machine, having a needle which guides the thread and a gripper co-operating with said needle, as well as having an apparatus for advancing the workpiece with a drive means for at least one advancement element which is displaceable along a predeterminable track, **characterised in that** the advancement apparatus (15) for driving the advancement element (14) has a linear drive means with two driveable elements (armatures 25, 26), one armature (26) being displaceable in the horizontal direction, and the other armature (25) being displaceable in the vertical direction, and **in that** the advancement apparatus (15) has associated therewith a regulating apparatus (47, 51) with a regulating circuit (49) for the horizontal displacements as well as with a regulating circuit (53) for the vertical displacements of the advancement element (14), both regulating circuits (49, 53) being subordinate to a principal regulating apparatus (6), which includes a data processing apparatus (7) and receives its synchronisation pulses from an encoder (5) in dependence on the respective instantaneous position of needle or gripper, and the actual values (48, 52) of the horizontal and/or vertical displacements of the advancement element (14) can be selectively supplied to the principal regulating apparatus (6).

2. Sewing or embroidering machine, having a needle which guides the thread and a gripper co-operating with said needle, as well as having an apparatus for advancing the workpiece with a drive means for at least one advancement element, which is displaceable along a predetermined track, and having a holding-down apparatus with a drive means for a holding-down means for the workpiece, **characterised in that** the co-operation of the advancement element (14) with the holding-down means (12) can be regulated by a principal regulating apparatus (6), which includes a data processing apparatus (7) and acts both on a regulating apparatus (47, 51) for the drive means of the advancement element (14) and on a regulating apparatus (54) for the drive means of the holding-down means (12), in such a manner that the compressive force of the holding-down means (12) follows the instantaneous displacement of the advancement element (14), the principal regulating apparatus. (6) receiving its synchronisation pulses from an encoder (5) in dependence on the respective instantaneous position of needle or gripper.

3. Sewing or embroidering machine according to claim 2, **characterised in that** the actual values (48, 52) of the vertical displacements and/or of the horizontal displacements of the advancement element (14) can be supplied to the principal regulating apparatus (6), and the drive means for the holding-down means (12) is regulated in dependence on the actual values (48, 52) of the advancement element (14).

4. Sewing or embroidering machine according to one or more of the preceding claims, **characterised in that** the holding-down means (12) can be selectively transferred to its upper or lower end position by means of external signals which can be supplied to its drive means.

5. Sewing or embroidering machine, having a thread-cutting apparatus with thread grippers/thread cutters gripping the gripper thread and a portion of the needle thread loop beneath the embroidering plate, according to one or more of the preceding claims, **characterised in that** the thread gripper/thread cutter (46) is disposed on the advancement element (14) in such a manner that the gripper thread and a portion of the needle thread loop can be gripped by the thread gripper/thread cutter (46) during an increased horizontal and/or vertical displacement of the advancement element (14), which displacement can be introduced by an external signal which can be supplied to the drive means of the advancement element (14).

6. Sewing or embroidering machine according to claim 5, **characterised in that** the external signal, which can be supplied to the drive means of the advancement element (14), for increasing the displacement of the advancement element (14) also serves to release the tensioning apparatus for the needle thread.

7. Sewing or embroidering machine according to one or more of the preceding claims, **characterised in that** the data processing apparatus (7) has a memory for different sewing parameters and additional functions, which can be called-up by means of a control panel (9) or via an interface and supplied to the principal regulating apparatus (6).

8. Sewing or embroidering machine according to one or more of the preceding claims, **characterised in that** the drive means of the holding-down apparatus (13) is in the form of an electromagnetic uniaxial linear drive means, the armature (19) of which is directly connected to a support (21, 21a) for the holding-down means (12).

9. Sewing or embroidering machine according to claim 8, **characterised in that** the uniaxial linear drive means is brushless.

10. Sewing or embroidering machine according to claim 8, **characterised in that** the armature (19) of the uniaxial linear drive means has no magnetic return shunt.

11. Sewing or embroidering machine according to one or more of the preceding claims, **characterised in that** the support (21, 21a) for the holding-down means (12) has a prismatic cross-section.

12. Sewing or embroidering machine according to or more of the preceding claims, **characterised in that** the electromagnetic linear drive means of the advancement apparatus (15) are in the form of a biaxial linear drive means with two displaceably interconnected armatures (25, 26), one armature (26) being driveable in the horizontal direction, and the other armature (25) being driveable in the vertical direction.

13. Sewing or embroidering machine according to one or more of the preceding claims, **characterised in that** the displacement of the armature (26) for the horizontal displacement of the advancement element (14) can be regulated independently of the displacement of the armature (25) for the vertical displacement of the advancement element (14).

14. Sewing or embroidering machine according to one or more of the preceding claims, **characterised in that** the displacement of the armature (26) for the horizontal displacement of the advancement element (14) can be regulated in dependence on the displacement of the armature (25) for the vertical displacement of the advancement element (14).

15. Sewing or embroidering machine according to one or more of the preceding claims, **characterised in that** the two armatures (25, 26) of the biaxial linear drive means are combined to form an armature which is driveable both in the horizontal direction and in the vertical direction.

16. Sewing or embroidering machine according to one or more of the preceding claims, **characterised in that** the armature (25), which is driveable in the vertical direction, is formed by two armature webs which are disposed with a spacing therebetween and parallel to each other and are interconnected by means of a support (27) which bridges a space for the gripper.

17. Sewing or embroidering machine according to one or more of the preceding claims, **characterised in that** the advancement element (14) is connected directly to one armature or to both armatures (25, 26) for its vertical or horizontal displacement respectively.

18. Sewing or embroidering machine according to one or more of the preceding claims, **characterised in that** the armatures (25, 26) of the biaxial linear drive means have a prismatic configuration and comprise polarised permanent magnets (25a, 26a).

19. Sewing or embroidering machine according to one or more of the preceding claims, **characterised in that** the permanent magnets (25a, 26a) are so disposed, or respectively so polarised, that the first group thereof effects the vertical displacement of the advancement element (14), and the second group effects the horizontal displacement of said element.

20. Sewing or embroidering machine according to one or more of the preceding claims, **characterised in that** the stator (31, 32) of the biaxial liner drive means is configured in such a manner that a first group of windings or respectively of stator poles, in co-operation with the first group of permanent magnets, effects the vertical displacement of the advancement element (14), and the second group of windings or respectively of stator poles, in co-operation with the second group of permanent magnets, effects the horizontal displacement of the advancement element (14).

21. Sewing or embroidering machine according to one or more of the preceding claims, **characterised in that** the armatures (25, 26) of the biaxial linear drive means have no magnetic return shunt.

22. Sewing or embroidering machine according to one or more of the preceding claims, **characterised in that** the biaxial linear drive means is in the form of a brushless linear drive means.

23. Sewing or embroidering machine according to one or more of the preceding claims, **characterised in that** the advancement element (14) is directly disposed on the support (27).

24. Sewing or embroidering machine according to one or more of the preceding claims, **characterised in that** the armatures (25, 26) of the biaxial linear drive means are indirectly or directly connected to an encoder (40), and said encoder is in the form of a two-dimensional encoder.

25. Sewing or embroidering machine according to one or more of the preceding claims, **characterised in that** two evaluation apparatuses, independent of each other, are associated with the two-dimensional encoder (40).

26. Sewing or embroidering machine according to one or more of the preceding claims, **characterised in that** the two-dimensional encoder (40) has two light barriers (41, 41a, 42, 42b) or two Hall probe arrangements.

27. Sewing or embroidering machine according to one or more of the preceding claims, **characterised in that** the encoder disc has two groups (44, 45) of bar codes, of which the first group (44) extends in a first direction and can be scanned by a first light barrier (41, 41a), while the second group (45) extends in a second direction and can be scanned by a second light barrier (42, 42b).

28. Sewing or embroidering machine according to one or more of the preceding claims, **characterised in that** the encoder disc has two differently coded regions, of which the first region can be scanned by a first Hall probe arrangement and the second region can be scanned by a second Hall probe arrangement.

## Revendications

1. Machine à coudre ou à broder comprenant une aiguille destinée à guider le fil et une navette coopérant avec celle-ci, ainsi qu'un dispositif d'avance de la pièce à coudre ou broder muni d'un moteur pour au moins une griffe d'entraînement mobile le long d'une trajectoire à prédéfinir, **caractérisée en ce que** le dispositif d'avance (15), pour actionner la griffe d'entraînement (14), comporte un moteur linéaire avec deux éléments susceptibles d'être actionnés (induits 25, 26), de telle manière que l'un des induits (26) puisse se déplacer dans le sens horizontal et que l'autre (25) se déplace dans le sens vertical, et **en ce que** le dispositif d'avance (15) est associé à un dispositif de réglage (47, 51), muni d'un circuit de réglage (49) pour les mouvements horizontaux et d'un circuit de réglage (53) pour les mouvements verticaux de la griffe d'entraînement (14), les deux circuits de réglage (49, 53) étant asservis à un dispositif de commande principal (6), qui est muni d'un dispositif de traitement des données (7) et qui reçoit ses impulsions de synchronisation d'un encodeur (5) en fonction de chaque position momentanée de l'aiguille ou de la navette, et les valeurs réelles (48, 52) des mouvements horizontaux et/ou verticaux de la griffe d'entraînement (14) peuvent être transmises au choix au dispositif de commande principal (6).

2. Machine à coudre ou à broder comportant une aiguille destinée à guider le fil et une navette coopérant avec celle-ci, ainsi qu'un dispositif d'avance de la pièce à coudre ou broder muni d'un moteur pour au moins une griffe d'entraînement mobile le long d'une trajectoire à prédéfinir et d'un dispositif de serrage de la pièce muni d'un mécanisme de commande pour un pied-de-biche serrant la pièce à coudre ou broder, **caractérisée en ce qu'**un dispositif de commande principal (6), qui comprend un dispositif de traitement des données (7) et qui agit sur un dispositif de réglage (47, 51) destiné à actionner la griffe d'entraînement (14), de même que sur un dispositif de réglage (54) destiné à commander le pied-de-biche (12) permet de régler l'action conjointe de la griffe d'entraînement (14) et du pied-de-biche (12), de telle sorte que la force de pression du pied-de-biche (12) suit le mouvement momentané de la griffe d'entraînement (14), le dispositif de commande principal (6) recevant ses impulsions de synchronisation d'un encodeur (5) en fonction de chaque position momentanée de l'aiguille et de la navette.

3. Machine à coudre ou à broder selon la revendication 2, **caractérisée en ce que** les valeurs réelles (48, 52) des mouvements horizontaux et/ou verticaux de la griffe d'entraînement (14) peuvent être acheminées au choix vers le dispositif de commande principal (6) et le réglage du mécanisme de commande du pied-de-biche (12) est effectué en fonction des valeurs réelles (48, 52) de la griffe d'entraînement (14).

4. Machine à coudre ou à broder selon une ou plusieurs des revendications précédentes, **caractérisée en ce que** le pied-de-biche (12) peut être déplacé au choix vers la position finale supérieure ou la position finale inférieure au moyen des signaux externes transmis vers son mécanisme de commande.

5. Machine à coudre ou à broder comprenant une unité munie d'un organe de retenue et de coupe du fil saisissant le fil de la navette et une branche de la boucle du fil de l'aiguille en dessous de la plaque à aiguille, selon une ou plusieurs des revendications précédentes, **caractérisée en ce que** l'organe de retenue et de coupe du fil (46) est monté sur la griffe d'entraînement (14), de telle sorte que, pendant le mouvement horizontal et/ou vertical agrandi susceptible d'être appliqué à la suite d'un signal externe acheminé vers le mécanisme de commande de la griffe d'entraînement (14), le fil de la navette et une branche de la boucle du fil de l'aiguille peuvent être saisis par l'organe de retenue et de coupe du fil (46) et amenés vers une lame de coupe.

6. Machine à coudre ou à broder selon la revendication 5, **caractérisée en ce que** le signal externe à acheminer vers le mécanisme de commande de la griffe d'entraînement (14) en vue d'agrandir le mouvement de la griffe d'entraînement (14) est aussi destiné à desserrer le dispositif de tension du fil de l'aiguille.

7. Machine à coudre ou à broder selon une ou plusieurs des revendications précédentes, **caractérisée en ce que** le dispositif de traitement des données (7) comporte une mémoire, dans laquelle sont stockés différents paramètres de couture et des fonctions supplémentaires, qui peuvent être activés par l'intermédiaire d'un panneau de commande (9) ou par l'intermédiaire d'une interface et peuvent être acheminés vers le dispositif de commande principal (6).

8. Machine à coudre ou à broder selon une ou plusieurs des revendications précédentes, **caractérisée en ce que** le mécanisme de commande du dispositif de serrage (13) est conçu sous forme de moteur linéaire électromagnétique à un seul axe, dont l'induit (19) est relié directement à un support (21, 21a) pour le pied-de-biche (12).

9. Machine à coudre ou à broder selon la revendication 8, **caractérisée en ce que** le moteur linéaire à un seul axe est conçu sans balais.

10. Machine à coudre ou à broder selon la revendication 8, **caractérisée en ce que** l'induit (19) du moteur linéaire à un seul axe ne comporte pas de système de shuntage en fer.

11. Machine à coudre ou à broder selon une ou plusieurs des revendications précédentes, **caractérisée en ce que** le support (21, 21a) pour le pied-de-biche (12) présente une section prismatique.

12. Machine à coudre ou à broder selon une ou plusieurs des revendications précédentes, **caractérisée en ce que** les moteurs linéaires électromagnétiques du dispositif d'avance (15) sont conçus sous forme de moteur linéaire à deux axes comprenant deux induits (25, 26) reliés entre eux sur le plan des mouvements, l'un des induits (26) pouvant être activé dans le sens horizontal et l'autre induit (25) pouvant être activé dans le sens vertical.

13. Machine à coudre ou à broder selon une ou plusieurs des revendications précédentes, **caractérisée en ce que** le mouvement de l'induit (26) pour le mouvement horizontal de la griffe d'entraînement (14) est indépendant du mouvement de l'induit (25) pour le mouvement vertical de la grille d'entraînement (14).

14. Machine à coudre ou à broder selon une ou plusieurs des revendications précédentes, **caractérisée en ce que** le mouvement de l'induit (26) pour le mouvement horizontal de la griffe d'entraînement (14) peut être réglé en fonction du mouvement de l'induit (25) pour le mouvement vertical de la grille d'entraînement (14).

15. Machine à coudre ou à broder selon une ou plusieurs des revendications précédentes, **caractérisée en ce que** les deux induits (25, 26) du moteur linéaire à deux axes sont regroupés en un seul induit, qui peut être activé dans le sens horizontal, de même que dans le sens vertical.

16. Machine à coudre ou à broder selon une ou plusieurs des revendications précédentes, **caractérisée en ce que** l'induit (25) activable dans le sens vertical est formé par deux traverses écartées l'une de l'autre et parallèles l'une à l'autre, qui sont assemblées entre elles par l'intermédiaire d'un support (27) passant au-dessus d'un espace libre pour la navette.

17. Machine à coudre ou à broder selon une ou plusieurs des revendications précédentes, **caractérisée en ce que** la griffe d'entraînement (14) est reliée directement à l'un des induits ou aux deux induits (25, 26) pour son mouvement vertical et horizontal.

18. Machine à coudre ou à broder selon une ou plusieurs des revendications précédentes, **caractérisée en ce que** les induits (25, 26) du moteur linéaire à deux axes sont conçus sous forme prismatique et sont formés par des aimants permanents (25a, 26a) polarisés.

19. Machine à coudre ou à broder selon une ou plusieurs des revendications précédentes, **caractérisée en ce que** les aimants permanents (25a, 26a) sont disposés et sont polarisés de telle sorte que le premier groupe de ceux-ci actionne le mouvement vertical de la griffe d'entraînement (14) et le deuxième groupe actionne le mouvement horizontal de celle-ci.

20. Machine à coudre ou à broder selon une ou plusieurs des revendications précédentes, **caractérisée en ce que** le stator (31, 32) du moteur linéaire à deux axes est conçu de telle sorte qu'un premier groupe d'enroulements ou de pôles du stator coopère avec le premier groupe d'aimants permanents pour actionner le mouvement vertical de la griffe d'entraînement (14) et le deuxième groupe d'enroulements ou de pôles du stator coopère avec le deuxième groupe d'aimants permanents pour actionner le mouvement horizontal de la griffe d'entraînement (14).

21. Machine à coudre ou à broder selon une ou plusieurs des revendications précédentes, **caractérisée en ce que** les induits (25, 26) du moteur linéaire à deux axes ne comportent pas de système de shuntage en fer.

22. Machine à coudre ou à broder selon une ou plusieurs des revendications précédentes, **caractérisée en ce que** le moteur linéaire à deux axes est conçu sous forme de moteur linéaire sans balais.

23. Machine à coudre ou à broder selon une ou plusieurs des revendications précédentes, **caractérisée en ce que** la griffe d'entraînement (14) est disposée directement sur le support (27).

24. Machine à coudre ou à broder selon une ou plusieurs des revendications précédentes, **caractérisée en ce que** les induits (25, 26) du moteur linéaire à deux axes sont reliés indirectement ou directement avec un encodeur (40) et celui-ci est conçu sous forme d'encodeur bidimensionnel.

25. Machine à coudre ou à broder selon une ou plusieurs des revendications précédentes, **caractérisée en ce que** deux dispositifs d'analyse, indépendants l'un de l'autre, sont associés à l'encodeur (40) bidimensionnel.

26. Machine à coudre ou à broder selon une ou plusieurs des revendications précédentes, **caractérisée en ce que** l'encodeur (40) bidimensionnel est muni de deux barrières optiques (41, 41a, 42, 42b) ou de deux capteurs à effet Hall.

27. Machine à coudre ou à broder selon une ou plusieurs des revendications précédentes, **caractérisée en ce que** le disque d'encodeur comporte deux groupes (44, 45) d'éléments de code barre, parmi lesquels le premier groupe (44) s'étend dans une première direction et peut être lu par une première barrière optique (41, 41a), alors que le deuxième groupe (45) s'étend dans une deuxième direction et peut être lu par une deuxième barrière optique (42, 42b).

28. Machine à coudre ou à broder selon une ou plusieurs des revendications précédentes, **caractérisée en ce que** le disque d'encodeur comporte deux zones de codes différents, parmi lesquelles la première zone peut être lue par un premier système de capteurs à effet Hall et la deuxième zone peut être lue par un deuxième système de capteurs à effet Hall.
